# EUROPEAN PATENT APPLICATION

(11) **EP 3 842 694 A1**
(43) Date of publication of application: **30.06.2021**
(21) Application number: 19219751.5
(22) Date of filing: 27.12.2019
(51) Int. Cl.: F24C 15/20

(54) **CEILING TYPE RANGE HOOD WITH IMPROVED HANGING AND INSTALLATION SYSTEM**

(71) Applicant: Silverline Endüstri ve Ticaret A.S., 05300 Amasya (TR)
(72) Inventor: Ceviksever, Tolga Güven, 05300 Amasya (TR); Dündar, Ugur, 05300 Amasya (TR)
(74) Representative: Mutlu, Aydin

(57) **Abstract**

The present invention relates to a ceiling type range hood assembly (1) comprising a range hood body (15) to be mounted on a ceiling (20) of a kitchen or built in kitchen furniture and a plurality of linear suspension means (11) each having a first end configured to be affixed to a support element (12) on or over the ceiling (20), and a second end introduced into the range hood body (15). The assembly (1) further comprises a plurality of hanging apparatus (16) with claw elements (17) corresponding to said linear suspension elements (11), wherein said claw element (17) comprises a through hole (173) accommodating said linear suspension element (11) and is adapted to allow movement of said linear suspension element (11) in only one direction (x₁) in a way such that range hood body (15) can be elevated and suspended in its position until next movement in the allowed direction (x₁).

## Description

### Technical Field

The present invention relates to a ceiling type range hood assembly comprising an improved hanging and installation system which enable mounting of the overall assembly in an easier and cost-effective way. In addition, the invention presents a novel method for mounting a range hood to the ceiling of a kitchen or built in kitchen furniture by using said assembly.

### Background of the Invention

It is known that an intense smell occurs during a cooking procedure in the kitchen. Due to this problem, range hoods are needed to extract the undesired smell in the room. There are several types of extractors in the market, including wall-chimney hoods, island hoods, downdraft hoods, ceiling type hoods etc. Among others, hanging and mounting of the ceiling type range hood is relatively harder and more complicated as compared to the other extractors as it needs to be assembled at a higher location (i.e. ceiling of kitchen or ceiling of built in kitchen furniture) which generally require at least two technicians to work collaboratively at the same time. Due to this reason, installation costs of the ceiling type range hoods are generally higher than other types of extractors. Another problem with ceiling type range hoods is that work safety of the technicians and safety of the kitchen appliances may be endangered because of the heavy weight of the range hood which may fall down unintentionally during installation.

It is known that various types of range hoods are hanged by means of vertical wires/cables, fixed on the one end to a support element on the ceiling, and fixed to the range hood body on the other end. One example of these types range hoods is of the type "chandelier" which may be hanged in a stationary fashion or arranged with moving mechanism moving main body of the range hood up and down.

One such assembly is disclosed in WO 2011/063969 A1 which provides a kitchen hood unit with suspension means for suspending it from a support element to be fixed to the ceiling of the room in which the hood unit is located, and a lifting/lowering device. This device enables the actual hood to approach or withdraw from the support element. Likewise, EP 2161507 A2 discloses a range hood hung upon a ceiling or wall by way of a cable element in a height adjustable manner. These types of range hoods are different than the ceiling type hoods as they are adapted to move in vertical direction according to the choice of the user. Ceiling type hoods, on the other hand, are fixed in a stationary manner to the ceiling of a kitchen or built in kitchen furniture, and constantly hung thereon without any movement. Therefore, ceiling type range hoods do not need a mechanism working in a height adjustable manner.

Nevertheless, there is still an unmet need for providing ceiling type range hoods which can be hung upon a support element on or over the ceiling via suspension means such as wires or cables while reducing the burden of extra effort during mounting of the hood, avoiding extra equipment such as a lifting/lowering device and increasing safety during installation. The ceiling type range hood according to the present invention advantageously provide a hanging apparatus as defined in the appended claims which enable easy positioning and elevation of the range hood without extra person or effort.

### Brief Description of the Invention

The present invention provides a ceiling type range hood assembly (1) comprising a range hood body (15) to be mounted on a ceiling (20) of a kitchen or built in furniture and a plurality of linear suspension means (11) each having a first end configured to be affixed to a support element (12) on or over the ceiling (20), and a second end introduced into the range hood body (15). The assembly (1) mentioned herein further comprises a plurality of hanging apparatus (16) with claw elements (17) corresponding to said linear suspension elements (11), wherein said claw element (17) comprises a through hole (173) accommodating said linear suspension element (11) and is adapted to allow movement of said linear suspension element (11) in only one direction (x₁) in a way such that range hood body (15) can be elevated and suspended in its position until next movement in the allowed direction (x₁).

The claw element (17) mentioned above preferably comprises gripping elements (174) in the hole (173) which allow movement of the linear suspension means (11) only in one direction (x₁) and interlocking with the same when a force is applied in counter direction (x₂). Preferably said claw element (17) also comprises a push button (175) which, once activated, releases the gripping elements (174) so that linear suspension means (11) can move in the hole (173) freely in both directions (x₁, x₂).

The assembly (1) of the present invention may also comprise a plate (13) configured to press and clamp first end of the linear suspension means (11) between the support element (12) and itself. In advantageous embodiments, the hanging apparatus (16) comprises also a housing (163) for accommodating excessive length of the linear suspension means (11) remaining after installation of the assembly (1).

Preferably, the hanging apparatus (16) further comprises a lid (164) for closing the housing (163) against release of the remaining linear suspension means (11). Said lid (164) can be affixed on the hanging apparatus (16) in a bendable manner.

In another aspect, the present invention provides a method for installation of the ceiling type range hood assembly (1), as well as a method for producing a ceiling type range hood assembly (1) as explained in greater detail in the present description.

### Brief Description of the Figures

The preferred embodiments of the present invention are illustrated via non-limiting drawings wherein;
Figure 1 shows a general view of a kitchen whereby a ceiling type range hood assembly is installed on the ceiling.
Figure 2 shows an exemplary connection of the first end of the linear suspension means (11) on a support element (12).
Figure 3 is a perspective view of the range hood body (15) with linear suspension means (11).
Figure 4 is an internal view of the range hood body (15) according to the present invention.
Figure 5 demonstrates elevation of the range hood body (15) by pulling the linear suspension means (11).
Figures 6 and 7 show different views of the hanging apparatus (16) according to the present invention.
Figure 8 is another view of the hanging apparatus (16) shown in Figures 6 and 7 with the linear suspension means (11) accommodated therein.
Figures 9a, 9b and 9c show different views of the claw element (17) according to the present invention.

### Detailed Description of the Invention

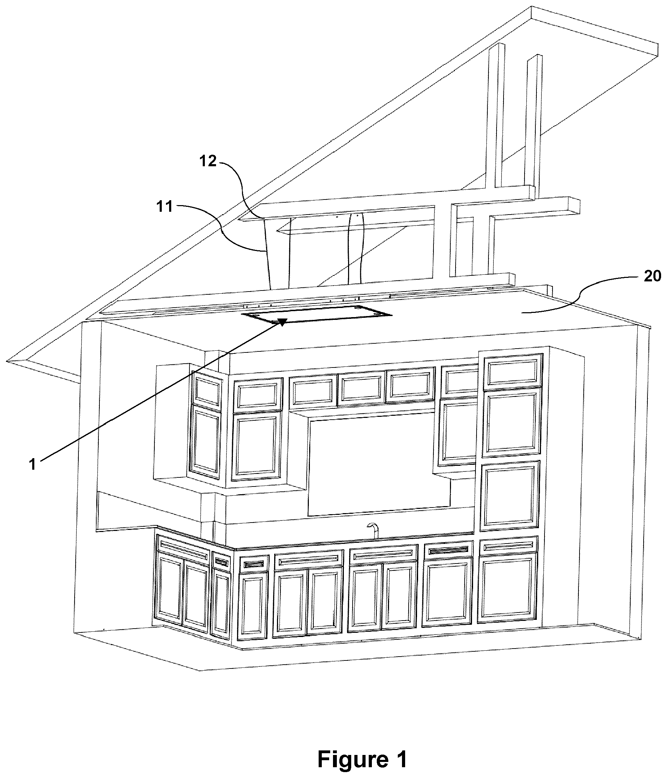

The present invention provides a ceiling type range hood assembly (1) which is mounted on a ceiling (20) of a kitchen or built in furniture as shown in Fig. 1. The assembly (1) is hung upon a support element (12) on or over the ceiling (20) by way of linear suspension means (11) such as wires or cables.

In the context of the present description, the "ceiling type range hood" refers to a range hood which is installed in a stationary manner on the ceiling of a kitchen or within a ceiling part of a built in furniture in a kitchen such as an undercabinet hood. The range hood assembly (1) of the present invention is advantageous in many aspects as it can be installed by a single person easily without the risk of unintentional downfall endangering safety of the worker and furniture. This range hood assembly (1) provides also additional safety after installation, as the suspension means (11) facilitating installation also constitute additional means of fixation for the range hood body after installation. In other words, the suspension means (11) affixed to a support element (12) reinforce fixation of the range hood and eliminate any risk of downfall during usage especially in the case of earthquakes.

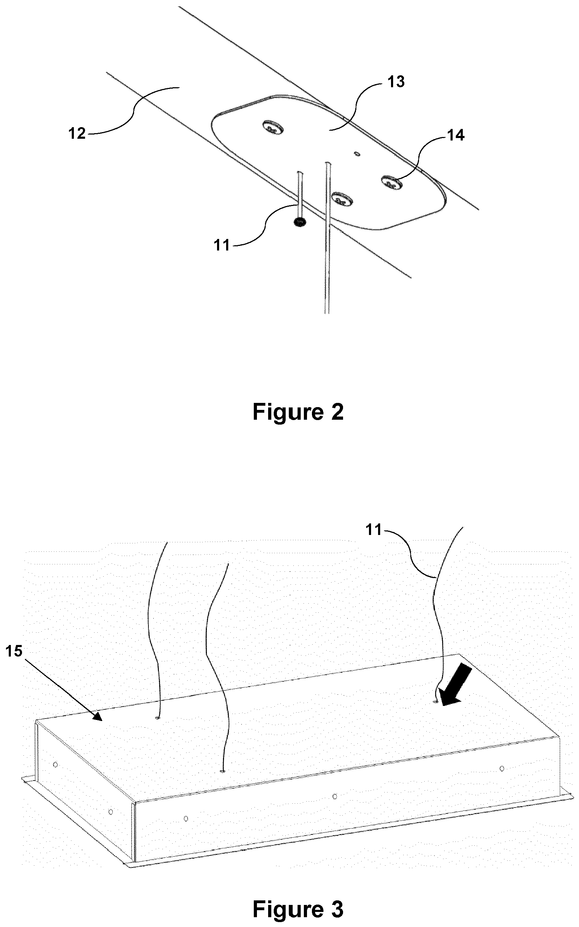

As shown in Fig. 2, a first end of the linear suspension means (11) is fixed to the support element (12) preferably with a plate (13) which is used to press and clamp said end of the suspension means (11) between the support element (12) and abovementioned plate (13). The plate (13) is preferably affixed to the support element (12) by way of screws (14).

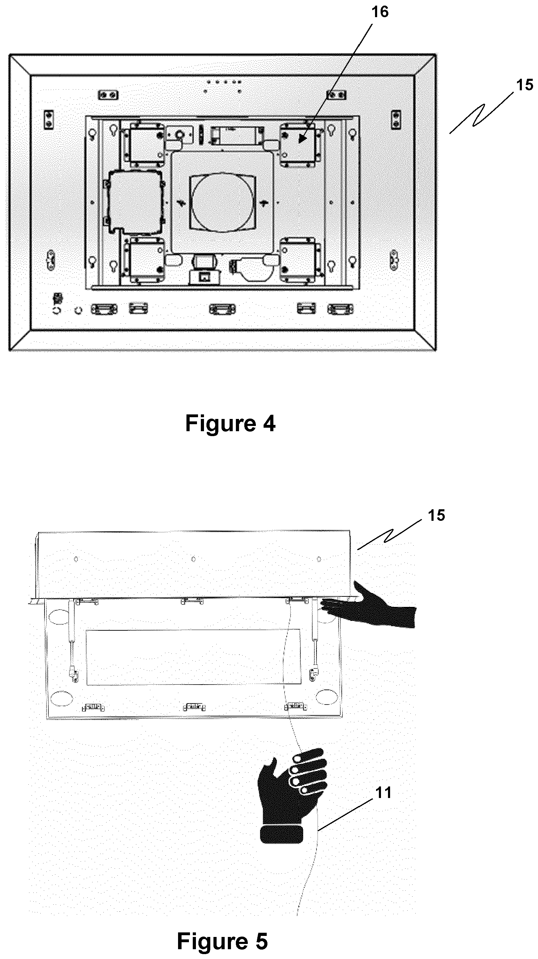

The second ends of the suspensions means (11) are introduced into range hood body (15) as shown in Fig. 3 via through holes and they are then introduced into the hanging apparatus (16) within the range hood body (15). As shown in Fig. 4, a plurality of hanging apparatus (16) are located in suitable positions within the range hood body (15) corresponding to the linear suspension means (11). Preferably, four hanging apparatus (16) are arranged in close proximity of corners of the range hood body (15).

The linear suspension means (11) passing through the hanging apparatus (16) are drooped downwards so that a technician may be pulling the suspension means (11) with one hand and lifting up the range hood body (15) with the other hand so that range hood body (15) can be elevated and brought closer to the ceiling (20). The technician repeats the above procedure on each of the linear suspension means (11) so that the range hood body (15) is eventually brought in place on the ceiling (20) gradually.

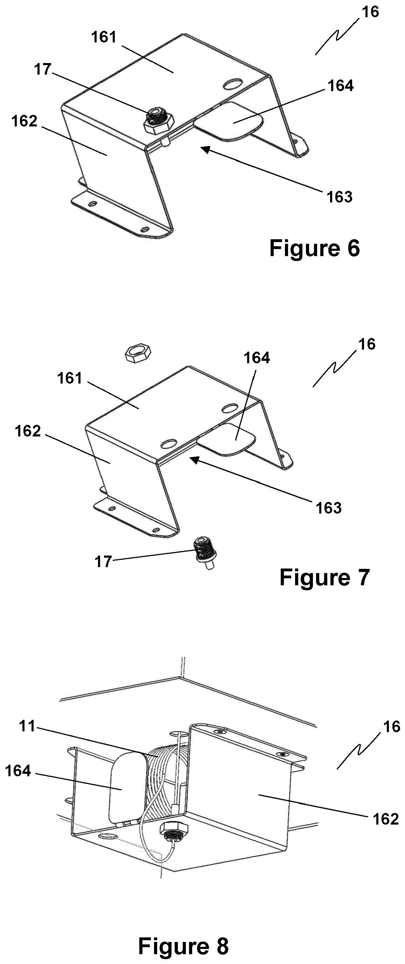

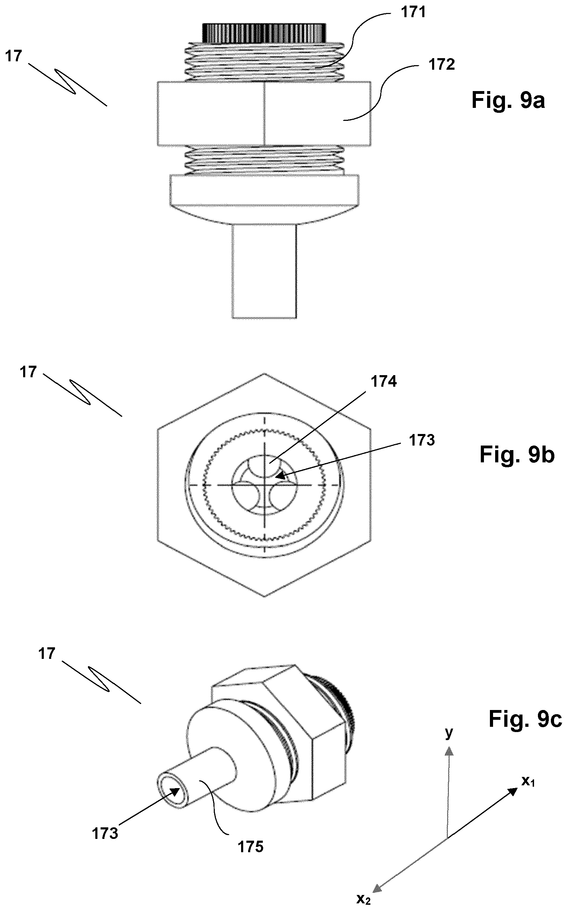

Figures 6, 7 and 8 show the hanging apparatus (16) in detail with and without the linear suspension means (11). The hanging apparatus (16) according to the present invention comprises a claw element (17) as shown in greater detail in Figures 9a, 9b and 9c. The claw element (17) is basically designed to have a body (171) through which a hole (173) is provided for passage of the linear suspension means (11). Said claw element (17) is embodied such that movement of the linear suspension means (11) passing through the hole (173) is normally allowed only in one direction (x₁) unless the push button (175) is activated by the technician. For this purpose, a plurality of gripping elements (174) are provided in the hole (173) which normally allow movement of the linear suspension means (11) only in one direction (x₁) and interlocking with the same when a force is applied in counter direction (x₂). When push button (175) is activated, the gripping elements (174) are released so that linear suspension means (11) can move in any direction (x₁, x₂) through the hole (173).

With the foregoing advantageous structure, once the linear suspension means (11) is introduced to the hole (173) of the claw element (17), it is not allowed to move in counter direction and therefore range hood body (15) is retained in its position. Once the technician pulls the linear suspension means (11) further, the range hood body (15) is also elevated further at a higher level. The technician mounting the assembly (1) may repeat this procedure for all of the linear suspension means (11) gradually so that range hood body (15) may eventually be placed into the ultimate location on the ceiling (20). If the technician desires to take the range hood body (15) down for maintenance, for instance, pressing the push button (175) shall release linear suspension means (11) in each of the claw elements (17), and it will again be possible to dismantle the assembly (1) easily with just one person as explained above.

The main body (171) of the claw element (17) may advantageously comprise a grooved surface as shown in Fig. 9a in order to be affixed to a surface (161) of the hanging apparatus (16), and optionally a nut (172) corresponding to the grooved surface may be provided for increasing durability of fixation mentioned above.

Turning back to the Figures 6, 7 and 8, the hanging apparatus (16) according to the present invention advantageously comprises an inner housing (163) which is generally formed by lateral walls (162) in order to accommodate excessive length of the linear suspension means (11). It is therefore possible to roll up said excessive material and hide it in the housing (163). Apparently, this specific structure of the hanging apparatus (16) ensures avoidance of cable/wire mess within the range hood body (15) and eliminate any danger of contact with electricity. Preferably, a lid (164) is also provided on one of the surfaces (161, 162) of the hanging apparatus (16) for accommodating the linear suspension means (11) safely for longer periods. The lid (164) can be affixed on said surfaces (161, 162) in a bendable manner without a need for additional fixations means such as a hinge.

In another aspect, the present invention provides a method for installation of a ceiling type range hood assembly (1) comprising the steps of:
- providing a range hood assembly (1) with plurality of linear suspension means (11) as mentioned above,
- fixing first end of each suspension means (11) to a support element (12) on or over the ceiling (20) of a kitchen or built in kitchen furniture,
- threading the second end of each suspension means (11) through the claw element (17) of the hanging apparatus (16),
- pulling each of the linear suspension means (11) and elevating the range hood body (15) until its final position on the ceiling (20).

Still in a further aspect, the present invention provides a method for manufacturing a ceiling type range hood assembly (1) comprising the steps of:
- providing a range hood body (15) to be mounted on a ceiling (20) of a kitchen or built in kitchen furniture and a plurality of linear suspension means (11) each having a first end configured to be affixed to a support element (12) on or over the ceiling (20), and a second end introduced into the range hood body (15),
- providing a plurality of hanging apparatus (16) with claw elements (17) corresponding to said linear suspension elements (11), and
- fixing said hanging apparatus (16) to the range hood body (15),
wherein said claw element (17) comprises a through hole (173) accommodating said linear suspension element (11) and is adapted to allow movement of said linear suspension element (11) in only one direction (x₁) in a way such that range hood body (15) can be elevated and suspended in its position until next movement in the allowed direction (x₁).

Further aspects and embodiments of the present invention will be apparent for those skilled in the art in view of the appended claims.

## Claims

1. A ceiling type range hood assembly (1) comprising a range hood body (15) to be mounted on a ceiling (20) of a kitchen or built in kitchen furniture and a plurality of linear suspension means (11) each having a first end configured to be affixed to a support element (12) on or over the ceiling (20), and a second end introduced into the range hood body (15),
**characterized in that;**
the assembly (1) further comprises a plurality of hanging apparatus (16) with claw elements (17) corresponding to said linear suspension elements (11), wherein said claw element (17) comprises a through hole (173) accommodating said linear suspension element (11) and is adapted to allow movement of said linear suspension element (11) in only one direction (x₁) in a way such that range hood body (15) can be elevated and suspended in its position until next movement in the allowed direction (x₁).

2. A ceiling type range hood assembly (1) according to claim 1 wherein the claw element (17) comprises gripping elements (174) in the hole (173) which allow movement of the linear suspension means (11) only in one direction (x₁) and interlocking with the same when a force is applied in counter direction (x₂).

3. A ceiling type range hood assembly (1) according to claim 2 wherein the claw element (17) further comprises a push button (175) which, once activated, releases the gripping elements (174) so that linear suspension means (11) can move in the hole (173) freely in both directions (x₁, x₂).

4. A ceiling type range hood assembly (1) according to claim 1 wherein the assembly (1) further comprises a plate (13) configured to press and clamp first end of the linear suspension means (11) between the support element (12) and itself.

5. A ceiling type range hood assembly (1) according to claim 1 wherein the hanging apparatus (16) are located within the range hood body (15).

6. A ceiling type range hood assembly (1) according to claim 1 wherein the hanging apparatus (16) comprises a housing (163) for accommodating excessive length of the linear suspension means (11) remaining after installation of the assembly (1).

7. A ceiling type range hood assembly (1) according to claim 6 wherein the hanging apparatus (16) further comprises lid (164) for closing the housing (163) against release of the remaining linear suspension means (11).

8. A ceiling type range hood assembly (1) according to claim 7 wherein the lid (164) is affixed on the hanging apparatus (16) in a bendable manner.

9. A ceiling type range hood assembly (1) according to claim 1 wherein the claw element (17) has a main body (171) having a grooved surface in order to be affixed to a surface (161) of the hanging apparatus (16).

10. A ceiling type range hood assembly (1) according to claim 1 wherein the linear suspension means (11) are cable or wire.

11. A method for installation of the ceiling type range hood assembly (1) comprising the steps of:
- providing a range hood assembly (1) according to any of the preceding claims with plurality of linear suspension means (11),
- fixing a first end of each suspension means (11) to a support element (12) on or over a ceiling (20) of a kitchen or built in kitchen furniture,
- threading a second end of each suspension means (11) through the claw element (17) of the hanging apparatus (16),
- pulling each of the linear suspension means (11) and elevating the range hood body (15) until its final position on the ceiling (20).

12. A method for producing a ceiling type range hood assembly (1) comprising the steps of:
- providing a range hood body (15) to be mounted on a ceiling (20) of a kitchen or built in kitchen furniture and a plurality of linear suspension means (11) each having a first end configured to be affixed to a support element (12) on or over the ceiling (20), and a second end introduced into the range hood body (15),
- providing a plurality of hanging apparatus (16) with claw elements (17) corresponding to said linear suspension elements (11), and
- fixing said hanging apparatus (16) to the range hood body (15),
wherein said claw element (17) comprises a through hole (173) accommodating said linear suspension element (11) and is adapted to allow movement of said linear suspension element (11) in only one direction (x₁) in a way such that range hood body (15) can be elevated and suspended in its position until next movement in the allowed direction (x₁).
